(19) Europäisches Patentamt
European Patent Office
Office européen des brevets

(11) **EP 1 651 340 B1**

(12) **FASCICULE DE BREVET EUROPEEN**

(45) Date de publication et mention
de la délivrance du brevet:
**23.12.2009 Bulletin 2009/52**

(21) Numéro de dépôt: **04767493.2**

(22) Date de dépôt: **28.06.2004**

(51) Int Cl.:
**B01J 13/00** *(2006.01)*   **C01B 25/32** *(2006.01)*

(86) Numéro de dépôt international:
**PCT/FR2004/001647**

(87) Numéro de publication internationale:
**WO 2005/002720 (13.01.2005 Gazette 2005/02)**

(54) **DISPERSION COLLOIDALE DE PLAQUETTES DE PHOSPHATE DE CALCIUM, ET SON PROCEDE D OBTENTION**

KOLLOIDALE DISPERSION VON CALCIUMPHOSPHATTABLETTEN UND HERSTELLUNGSVERFAHREN DAFÜR

COLLOIDAL DISPERSION OF CALCIUM PHOSPHATE TABLETS AND METHOD OF OBTAINING SAME

(84) Etats contractants désignés:
**AT BE BG CH CY CZ DE DK EE ES FI FR GB GR HU IE IT LI LU MC NL PL PT RO SE SI SK TR**

(30) Priorité: **30.06.2003 FR 0307879**

(43) Date de publication de la demande:
**03.05.2006 Bulletin 2006/18**

(73) Titulaire: **RHODIA CHIMIE**
**92512 Boulogne Billancourt Cedex (FR)**

(72) Inventeur: **CHANE-CHING, Jean-Yves**
**F-95600 Eaubonne (FR)**

(74) Mandataire: **OK pat AG**
**Chamerstrasse 50**
**CH-6300 Zug (CH)**

(56) Documents cités:
**US-A- 4 721 615    US-A- 5 427 754**
**US-A- 5 782 971**

• **PATENT ABSTRACTS OF JAPAN vol. 2000, no. 08, 6 octobre 2000 (2000-10-06) & JP 2000 128513 A (NEW RAIMU KENKYUSHA:KK), 9 mai 2000 (2000-05-09)**

**Description**

La présente invention a pour objet des dispersions colloïdales de plaquettes de phosphate de calcium, ainsi que leur procédé d'obtention.

Dans de nombreux produits, il est utile d'ajouter des composés, en particulier le phosphate de calcium, utiles comme charge de renfort, charge d'isolation thermique, excipient pharmaceutique, agent de polissage, agent de support, matériaux de construction, additif pour les formulations bucco-dentaires ou agent d'encapsulation.

En particulier il est connu d'utiliser le phosphate de calcium sous différentes formes, comme par exemple les formes plaquettes, particules, ou dispersions.

Cependant dans le cas des dispersions, les dispersions de phosphate de calcium actuellement disponibles présentent une faible transparence, ce qui est un inconvénient lorsque l'on veut utiliser ces dispersions comme charge de renfort, par exemple dans des matrices polymères transparentes. Cette faible transparence est due à la taille des objets présents dans la dispersion, en particulier à la taille des particules de phosphate de calcium obtenues par les techniques actuelles.

Or, les technologies disponibles actuellement, ne permettent pas d'obtenir des dispersions colloïdales de plaquettes de phosphate de calcium dont la taille des plaquettes est inférieure au micron.

Dans le cas de la forme plaquette, il est possible de renforcer une matrice par des plaquettes de phosphate de calcium ce qui permet d'augmenter la tortuosité du chemin diffusionnel de gaz et de diminuer la diffusion des gaz à travers ces matériaux renforcés.

Cependant les plaquettes de phosphate de calcium actuellement disponibles ne diminue pas ou peu la diffusion des gaz

Afin de répondre aux exigences des industriels, il est devenu nécessaire de trouver d'autres moyens pour apporter des composés stables dont la morphologie est contrôlée et de petite taille, notamment inférieure au micron.

Aussi le problème que se propose de résoudre l'invention est de fournir un composé, notamment sous forme de dispersion, stable, de taille nanométrique, et à morphologie contrôlée et plaquetaire.

Dans ce but l'invention propose des dispersions colloïdales de plaquettes de phosphate de calcium contenant au moins un polymère complexant du calcium et dont la longueur des plaquettes, L, est comprise entre 5 et 500 nm et dont l'épaisseur des plaquettes est comprise entre 0,5 et 20 nm.

L'invention a aussi pour objet les plaquettes de phosphate de calcium obtenues par séchage de la dispersion colloïdale selon l'invention.

L'invention propose également un procédé pour préparer ces dispersions colloïdales de plaquettes de phosphate de calcium selon l'invention.

Enfin l'invention a également pour objet l'utilisation des dispersions colloïdales de plaquettes pré-citées comme additif alimentaire, charge de renfort, charge d'isolation thermique, excipient pharmaceutique, agent de polissage, matériaux de construction, additif pour les formulations bucco-dentaires notamment les dentifrices ou agent d'encapsulation.

Les dispersions selon l'invention ont pour avantage de pourvoir enrichir en calcium le produit dans lequel elles sont incorporées. C'est le cas notamment dans le domaine alimentaire où l'on peut incorporer les dispersions selon l'invention dans les aliments, les boissons ou les préparations alimentaires de manière à supplémenter en calcium ces produits. C'est également le cas dans le domaine pharmacologique où il est utile d'ajouter les dispersions selon l'invention à titre de source de calcium, dans des comprimés ou des solutions dans le but, par exemple, de prévenir l'ostéoporose ou pour traiter les maladies des os.

Les dispersions selon l'invention ont encore pour avantage d'être limpide à l'oeil, ce qui permet de pourvoir les incorporer dans des liquides sans modifier la transparence initiale du liquide dans lequel elles sont incorporées.

L'invention a pour avantage d'apporter une source de calcium qui peut être un précurseur d'hydroxy-apatite [ $Ca_{10}(PO_4)_6(OH)_2$ ] qui est la substance minérale qui se dépose sur la matrice osseuse au cours de l'édification du squelette. Un procédé pour la production d'hydroxy- apatite est décrit dans US-A-5 427 754.

L'invention a pour autre avantage de fournir des dispersions colloïdales de plaquettes de phosphate de calcium, qui sont utilisables dans le domaine dentaire afin d'éviter la déminéralisation, notamment dans les pâtes dentifrices ou les bains de bouche.

L'invention a encore comme avantage de ne pas utiliser de caséines.

Un autre avantage de l'invention est de fournir des dispersions colloïdales de plaquettes qui puissent fournir de fortes concentrations en calcium aux produits auxquelles elles sont ajoutées.

D'autres avantages et caractéristiques de la présente invention apparaîtront clairement à la lecture de la description et des exemples donnés à titre purement illustratif et non limitatif, qui vont suivre.

L'invention concerne tout d'abord une dispersion colloïdale de plaquettes de phosphate de calcium contenant au moins un polymère complexant du calcium et dont la longueur des plaquettes, L, est comprise entre 5 et 500 nm et dont l'épaisseur des plaquettes est comprise entre 0,5 et 20 nm.

Les dispersions selon l'invention comprennent de préférence des plaquettes de phosphate de calcium présentant avantageusement une structure monétite ou apatite. La structure monétite ou la structure apatitique peut être montrée par diffraction aux rayons X, mais également par d'autres techniques usuelles dans ce domaine.

La morphologie des plaquettes contenues dans la dispersion selon l'invention peut être visualisée, entre autre, par microscopie électronique à transmission.

Par plaquettes au sens de l'invention, on entend des formes plaquettaires, ou de feuilles ou encore de lamelles, et plus généralement tout volume de faible épaisseur et de plus grande longueur que largeur.

Les dispersions selon l'invention présentent des plaquettes dont la longueur, L, est avantageusement comprise 5 et 300 nm, de préférence entre 5 et 200 nm, et dont l'épaisseur est de préférence comprise entre 0,5 et 15 nm. Ces tailles ont été déterminées par microscopie électronique à transmission en utilisant la cryo microscopie suivant la technique Dubochet. Cette technique de microscopie peut être effectuée sur des dispersions diluées. Cette technique permet de visualiser l'état d'agrégation des plaquettes.

Les plaquettes contenues dans la dispersion selon l'invention peuvent être constituées de plaquettes élémentaires individualisées. Les dispersions selon l'invention peuvent également contenir des agrégats de plusieurs plaquettes élémentaires. Avantageusement 60% en nombre des plaquettes ou des agrégats de plaquettes dans la dispersion possèdent une taille inférieure ou égale à 500 nm, de préférence 70% et avantageusement 80%.

La taille des plaquettes peut également être déterminée par diffusion quasi-élastique de la lumière. Par cette technique, on détermine un diamètre équivalent, $d_{50}$, qui est compris entre 50 et 300 nm.

Les dispersions colloïdales selon l'invention peuvent comprendre au moins un polymère complexant du calcium possédant des fonctions anioniques, de préférence des fonctions carboxylate, phosphate ou phosphonate.

Le polymère peut se trouver dans la phase continue de la dispersion ou dans la phase discontinue, c'est à dire au niveau des plaquettes par exemple adsorbé en surface des plaquettes, ou lié à celles-ci.

Avantageusement le polymère complexant du calcium est choisi parmi les polymères à squelette peptidique de type acide polyaspartique, polyglutamique, polylysine, polyglycine ou bien parmi les homopolymères et copolymères de l'acide acrylique ou méthacrylique, de l'acide polyacrylique ou polyméthacrylique ou bien parmi les copolymères du type polyacrylique-polyméthacrylique, polyacrylique-polyhydroxyethylacrylique, polyacrylique-polyacrylamide ou bien parmi les polymères polysaccharides naturels et/ou modifiés tel que le guar, la carboxymethylcellulose, la gomme xanthane ou bien parmi les polymères polysaccharides modifiés possédant des fonctions phosphates ou phosphonates ou bien parmi les polymères peptitidiques contenant des fonctions phosphates.

Avantageusement le polymère complexant du calcium mis en oeuvre dans les dispersions selon l'invention possède un poids moléculaire, PM, compris entre 1000 et 20000 g/mole, de préférence compris entre 1000 et 5000 g/mole.

Il est possible de déterminer pour chaque dispersion le rapport molaire $R_1$ :

$$R_1 = \frac{\text{moles de fonctions anioniques présent au sein du polymère}}{\text{moles de calcium}}$$

De préférence ce rapport molaire, $R_1$, est compris entre 0,0001 et 0,1, avantageusement compris entre 0,0001 et 0,03.

Les plaquettes présentes au sein de la dispersion selon l'invention présentent avantageusement une structure apatitique lorsque le polymère utilisé est de préférence un polymère à squelette polypeptidique, du type polyaspartique. La structure apatitique est obtenue lorsque le rapport $R_1$ est de préférence compris entre 0,0001 et 0,06.

Les plaquettes présentes au sein de la dispersion selon l'invention présentent avantageusement une structure monétite lorsque le polymère utilisé est de préférence un polymère choisi parmi les polymères du type homopolymères ou copolymères de l'acide acrylique ou méthacrylique ou un polymère à squelette polysaccharide.

Les dispersions selon l'invention peuvent comprendre au moins un agent dispersant.

De préférence l'agent dispersant est choisi parmi les polyphosphates, en particulier le tripolyphosphate de sodium, mais d'autres agents dispersant peuvent être envisagés.

Il est également possible de déterminer pour chaque dispersion le rapport molaire, $R_2$,

$$R_2 = \frac{\text{mole d'agent dispersant}}{\text{mole de calcium}}$$

De préférence ce rapport molaire, $R_2$, est compris entre 0,001 et 0,5, et de préférence compris entre 0,001 et 0,1.

Les plaquettes présentes au sein de la dispersion selon l'invention peuvent comprendre des éléments dopants.

De préférence ces éléments dopants sont choisis parmi les éléments alcalinoterreux comme le strontium, le magnésium, les éléments de terres rares comme l'yttrium ou les éléments de numéro atomique compris entre 57 et 71. D'autres éléments dopants peuvent également être envisagés, en fonction des différentes applications des dispersions selon l'invention.

Les dispersions selon l'invention peuvent également contenir diverses espèces chimiques absorbées ou liées. Ces espèces chimiques peuvent être par exemple des ions tels que des ions $Na^+$, $NH_4^+$, $Cl^-$, $NO_3^-$. Ces diverses espèces chimiques peuvent être présentes seules ou en combinaison.

La dispersion colloïdale peut également contenir des quantités résiduelles de polymère complexant du calcium, d'agent dispersant ou stabilisant et des espèces précitées présentes au sein de la phase continue de la dispersion colloïdale.

La concentration des dispersions colloïdales est de préférence supérieure à 20 g/l, avantageusement supérieure à 100 g/l en plaquettes.

La présente invention a également pour objet les plaquettes de phosphate de calcium obtenues par séchage de la dispersion colloïdale selon l'invention.

Par séchage on entend toute technique de séparation d'un solide dans un liquide. Par exemple on peut citer, comme technique de séchage, l'ultracentrifugation.

De préférence, la dispersion selon l'invention est séchée, par exemple par atomisation pour recueillir les plaquettes de l'invention sous forme solide.

Ces plaquettes peuvent se présenter sous forme de poudre solide. Dans ce cas les plaquettes sont de préférence agglomérées et peuvent se redisperser sous l'action d'un cisaillement dans une matrice polymère.

Ces plaquettes peuvent contenir les divers polymères complexant du calcium, les divers agents dispersants, les divers dopants et / ou diverses espèces chimiques absorbées ou liées décrits précédemment.

La présente invention a également pour objet le procédé de préparation des dispersions selon l'invention.

Le procédé de préparation des dispersions selon l'invention est caractérisé en ce qu'il comprend les étapes suivantes :

    i) préparer une solution de sels de calcium dont le pH est compris entre 4 et 6;
    ii) ajouter à la solution obtenue à l'étape i) une solution de phosphate, pendant une durée comprise entre 30 minutes et 4 heures et de manière à obtenir un rapport molaire calcium sur phosphore compris entre 1 et 2,5 et en maintenant constant le pH à une valeur comprise entre 4 et 6 ;
    iii) traiter thermiquement la dispersion obtenue à l'étape ii) à une température comprise entre 50°C et 95°C ;
    iv) laver la dispersion obtenue à l'étape iii) ;
    v) ajouter un agent dispersant à la dispersion obtenue à l'étape iv) ;
    vi) séparer la dispersion colloïdale obtenue à l'étape v) ; et en ce qu'il utilise dans au moins l'une des étapes i) ou ii) des solutions contenant un ion ammonium ;
    et en ce que l'on ajoute au moins un polymère complexant du calcium au cours de l'étape i) ou ii) mais avant l'étape iii).

Selon un mode de réalisation particulier, les étapes i) et ii) peuvent être inversées. Dans ce cas la première étape du procédé est l'étape ii), et la deuxième étape est l'étape i).

L'étape ii) du procédé est de préférence réalisée par addition en continue et non pas de manière instantanée de la solution obtenue à l'étape i). Cette addition peut également se faire par un goutte à goutte ou une addition en discontinue à intervalle régulier de temps.

Cette addition de solution de phosphate à la solution de calcium est réalisée avec addition continue d'ions $OH^-$, de préférence de $NH_4OH$ de manière à réguler le pH de la solution au pH de consigne. Le pH de consigne est de préférence compris entre 4 et 6.

La concentration en ions OH- de la solution d'ions OH- servant à réguler le pH à l'issu de l'étape ii) peut varier de préférence entre 1 M et 6M, plus particulièrement entre 2M et 4M.

L'addition d'ions OH- à l'étape ii) peut être réalisée de manière à maintenir constant le pH de la dispersion régulée à pH compris entre 4 et 6 (pH de consigne), de préférence à pH égal à 5, ou à débit constant à l'aide d'une pompe. Par pH constant on entend un pH dont la valeur a été fixée à une valeur comprise entre 4 et 6 et dont le pH ne varie pas de plus 0,2 unités de pH par rapport à cette valeur.

La quantité d'ions OH - versée est telle que le rapport molaire OH - / P est compris entre 1 et 2,5, de préférence entre 1,5 et 2.

La solution de calcium utilisée selon le procédé de l'invention est avantageusement une solution de $CaCl_2$ ou de $Ca(NO_3)_2$. Cette solution peut éventuellement contenir des sels dopants comme ceux indiqués plus haut.

De préférence la concentration de la solution de calcium est comprise entre 0,25M et 2,5M, de préférence entre 1,25M et 1,75M.

La solution de sel de phosphate utilisée selon le procédé de l'invention est avantageusement une solution de phosphate d'ammonium ou de sodium, notamment de $(NH_4)_2(HPO_4)$ ou $(NH_4)(H_2PO_4)$.

Selon le procédé de l'invention, le rapport molaire calcium sur phosphore est avantageusement compris entre 1,3 et 1,7, plus particulièrement il est de 1,66.

Les étapes i) et ii) sont de préférence réalisées à une température de 20°C plus ou moins 5°C. Mais d'autres températures de réaction peuvent être envisagées.

Le polymère complexant du calcium, décrit précédemment, peut être ajouté au cours de l'étape i) ou ii) mais avant l'étape de traitement thermique (étape iii).

Dans le cas où le polymère est incorporé à la solution d'ions phosphate (étape ii), la quantité de polymère incorporée est déterminée par le rapport $R_3$ , nombre de mole de monomère M constitutif du polymère M / nombre de moles de calcium ajoutées, avec $R_3$ tel que $0,01 < R_3 < 0,1$. De même, la solution d'ions phosphate contenant le polymère est ajustée à un pH compris entre 4 et 6, comme indiqué précédemment.

A l'issu de l'étape ii), on obtient de préférence une dispersion sous forme d'un précipité. Par diffraction aux rayons X sur le précipité formé à l'issue de cette étape, qui a été centrifugé puis séché à 20°C. Par microscopie, on observe une morphologie plaquettaire d'objet de taille micronique.

Le procédé selon l'invention comprend une étape de traitement thermique, étape iii), dont la température est avantageusement comprise entre 50°C et 95°C, de préférence comprise entre 60°C et 90°C. Ce traitement thermique est aussi nommé mûrissement et a lieu pendant environ 3h à 24 h, de préférence pendant 3h à 16h. La montée en température peut avoir lieu de 1 minute à 30 minutes.

Le procédé selon l'invention comprend une étape de lavage, étape iv). Cette étape iv) consiste en une purification ou élimination des espèces ioniques du milieu réactionnel. Cette élimination des espèces ioniques peut être obtenue par ultrafiltration sur membranes ou par tout procédé de séparation solide liquide comme la filtration, la centrifugation.

A l'étape iv) du procédé selon l'invention, le précipité solide obtenu peut être lavé en utilisant une solution aqueuse, de préférence de l'eau déminéralisée. Ce lavage est de préférence réalisé en utilisant de 1 à 10 fois le volume du surnageant du précipité à laver. Puis le précipité lavé peut être séparé.

L'étape v) du procédé selon l'invention est réalisée de préférence en redispersant le précipité lavé obtenu, à l'aide d'une solution d'agent dispersant en particulier à l'aide d'une solution de tripolyphosphate.

La concentration de la solution d'agent dispersant est déterminée par le rapport molaire $R_4$ de moles d'agent dispersant sur mole de calcium, $R_4$ étant compris entre 0,001 et 0,5, de préférence compris entre 0,02 et 0,4, et est également déterminée par la concentration finale en calcium de la dispersion. Cette concentration finale en calcium est de préférence comprise entre 0,25M et 1,5M.

Après ajout de la solution d'agent dispersant, la solution est agitée pendant avantageusement 10 minutes à 6 heures, de préférence à température ambiante. Lors de cette agitation, il peut se produire un échange entre le polymère adsorbé en surface des plaquettes et les ions polyphosphates. On peut ainsi procéder éventuellement à une nouvelle étape de purification par exemple par ultrafiltration.

On laisse reposer la dispersion obtenue à l'issue de l'étape v) à température ambiante. On observe la formation d'un précipité (culot) et d'une phase surnageante colloïdale.

Au cours de l'étape vi), on sépare la dispersion colloïdale obtenue (surnageant) et le culot. Le culot est éliminé, par différentes techniques connues de l'homme du métier, notamment par siphonnage ou par centrifugation et le surnageant est conservé. Ce surnageant constitue la dispersion colloïdale selon l'invention. Cette dispersion colloïdale peut éventuellement être concentrée par ultrafiltration.

Enfin l'invention concerne l'utilisation des dispersions selon l'invention ou des plaquettes selon l'invention comme additif alimentaire, comme charge de renfort, charge d'isolation thermique, excipient pharmaceutique, agent de polissage, matériaux de construction, additif pour les formulations bucco-dentaires notamment les dentifrices ou agent d'encapsulation.

Les exemples suivants illustrent l'invention sans toutefois en limiter la portée.

**EXEMPLES**

**Exemple 1 : Procédé de préparation de dispersions colloïdales de plaquettes de phosphate de calcium à structure monétite , en présence de polymère polyacrylique ( (03 MPP 019).**

Etape i) : Une solution A est préparée par dissolution de 36,75 g de $CaCl_2$, $2H_2O$ (PM= 147 g/mole) dans 150 ml d'eau. On ajuste le pH à la valeur de 5 par addition de 0,3 ml d'une solution de $HNO_3$ à 0,01 M et on complète à 250 ml par de l'eau déminéralisée.

Etape ii) : Une solution B est préparée par dissolution de 19,8 g de $(NH_4)_2HPO_4$ (PM=132 g/mole) dans 200 ml d'eau. On neutralise cette solution à un pH de 5 par l'addition de 19 ml d'une solution de $HNO_3$ à 12M. Puis on complète à 250 ml par addition d'eau déminéralisée.

Dans un réacteur agité, à 20°C, on verse en fond de cuve la solution A de sel de calcium. On additionne en deux heures et à pH régulé la solution B de phosphate. La régulation de pH est obtenue à l'aide d'une solution de $NH_4OH$ à 3M. La quantité d'ammoniaque 3M versée lors du maintien en pH est de 92 ml.

A la fin de l'addition on laisse sous agitation 5 minutes. Le rapport molaire est Ca/P= 1,66.

On additionne à débit constant en 5 mn à l'aide d'une pompe 10 ml de solution aqueuse contenant 0, 47 g de polymère polyacrylique (PAA) ( PM=2000, Aldrich) et ajusté à pH 5 par $HNO_3$.

Le rapport molaire $R_3$ = 0.025.

A la fin de l'addition on laisse sous agitation 5 minutes.

Etape iii) : La dispersion est ensuite portée à 80°C. La montée en température dure environ 30 minutes. Le temps de mûrissement à 80°C est de 16 heures.

Etape iv) : Après refroidissement de la dispersion, on recueille le produit solide par centrifugation. Le produit solide est lavé par 4 fois son volume d'eau et on re-volume à 600 ml par de l'eau déminéralisée.

On sèche à température ambiante une aliquote de 120 ml de suspension re-homogénéisée.

La surface spécifique du produit séché est de 71 $m^2$/g. Par diffraction aux rayons X sur le produit séché, on observe principalement la présence d'une structure monétite.

Etape v) : Sur 480 ml de suspension lavée non séchée, on additionne 7,36 g de tri-poly- phosphate de sodium ( $M_w$ $Na_5P_3O_{10}$= 368 g) soit un rapport molaire $R_4$ (tri-polyphosphate / Ca ) = 0,1. On met sous agitation à température ambiante pendant 6 heures et on laisse reposer. On observe la formation d'une phase surnageante limpide à l'oeil et d'un décantat.

Etape vi) : On recueille la phase surnageante qui constitue la dispersion colloïdale de l'invention.

Par diffusion quasi-elastique de la lumière, le diamètre hydrodynanique moyen est déterminé égal à 205 nm. Par microscopie électronique à transmission, on observe la présence de plaquettes à répartition non monodisperse. Des plaquettes individualisées de taille d'environ 60 nm ainsi que des agrégats de plaquettes sont visibles.

**Exemple 2: Procédé de préparation de dispersions colloïdales de plaquettes de phosphate de calcium à structure apatite, en présence de polymère poly-aspartique (03 MPP 006).**

Etape i) : Une solution A est préparée par dissolution de 36,75 g de $CaCl_2$, $2H_2O$ (PM= 147 g/mole) dans 150 ml d'eau. On ajuste le pH à la valeur de 5 par addition de 0,3 ml d'une solution de $HNO_3$ à 0,01 M et on complète à 250 ml par de l'eau déminéralisée.

Etape ii) : Une solution B est préparée par dissolution de 19,8 g de $(NH_4)_2HPO_4$ (PM=132 g/mole) dans 200 ml d'eau. On neutralise cette solution à un pH de 5 par l'addition de 19 ml d'une solution de $HNO_3$ à 12M. Puis on complète à 250 ml par addition d'eau déminéralisée.

Dans un réacteur agité, à 20°C, on verse en fond de cuve la solution A de sel de calcium. On additionne en deux heures et à pH régulé la solution B de phosphate. La régulation de pH est obtenue à l'aide d'une solution de $NH_4OH$ à 3M. La quantité d'ammoniaque 3M versée lors du maintien en pH est de 92 ml.

A la fin de l'addition on laisse sous agitation 5 minutes. Le rapport molaire est Ca/P= 1,66.

On additionne à débit constant en 5 mn à l'aide d'une pompe 10 ml de solution aqueuse contenant 5,1g de Poly-aspartate de Na à 40%wt ( PM=3000, Aldrich) et ajusté à pH 5 par $HNO_3$ .

Le rapport molaire $R_3$ = 0.06

A la fin de l'addition on laisse sous agitation 5 minutes.

Etape iii) : La dispersion est ensuite portée à 80°C. La montée en température dure environ 30 minutes. Le temps de mûrissement à 80°C est de 16 heures.

Etape iv) : Après refroidissement de la dispersion, on recueille le produit solide par centrifugation. Le produit solide est lavé par 4 fois son volume d'eau et on re-volume à 600 cc par de l'eau déminéralisée.

On sèche une aliquote de suspension à température ambiante. La surface spécifique du produit séché est de 94 $m^2$/g. Par diffraction aux rayons X sur le produit séché , on observe principalement la présence d'une structure apatite, avec des raies légèrement décalées vers les petits angles par rapport aux raies de la structure hydroxy-apatite.

Etape v) : Sur 200 ml de suspension lavée non séchée, on additionne 3,04 g de tri-poly- phosphate de sodium ( $M_w$ $Na_5P_3O_{10}$= 368 g) soit un rapport molaire $R_4$ (tri-polyphosphate / Ca ) = 0,1. On met sous agitation à température ambiante pendant 6 heures et on laisse reposer. On observe la formation d'une phase sumageante colloïdale limpide à l'oeil et d'un précipité.

Etape vi) : On recueille la phase surnageante qui constitue la dispersion colloïdale de l'invention.

Par diffusion quasi élastique de la lumière le diamètre hydrodynamique moyen est déterminé égal à 230 nm. Par microscopie électronique à transmission, on observe la présence de plaquettes à répartition non monodisperse. Des plaquettes individualisées de taille d'environ 100 nm ainsi que des agrégats de plaquettes sont visibles.

Par évaporation et calcination d'une aliquote à 600°C, on détermine un extrait sec d'environ 16 g /l.

**Revendications**

1. Dispersion colloïdale de plaquettes de phosphate de calcium contenant au moins un polymère complexant du calcium et dont la longueur des plaquettes, L, est comprise entre 5 et 500 nm et dont l'épaisseur des plaquettes est comprise entre 0,5 et 20 nm.

2. Dispersion colloïdale selon la revendication 1 **caractérisée en ce que** la longueur des plaquettes L est comprise 5 et 300 nm, de préférence entre 5 et 200 nm.

3. Dispersion colloïdale selon l'une des revendications précédentes **caractérisée en ce que** l'épaisseur des plaquettes est comprise entre 0,5 et 15 nm.

4. Dispersion colloïdale selon l'une des revendications précédentes **caractérisée en ce qu'**elle comprend des plaquettes de phosphate de calcium présentant une structure monétite ou apatite.

5. Dispersion colloïdale selon l'une des revendications précédentes **caractérisée en ce qu'**elle comprend au moins un polymère complexant du calcium possédant des fonctions anioniques, de préférence des fonctions carboxylate, phosphate ou phosphonate.

6. Dispersion colloïdale selon l'une des revendications précédentes **caractérisée en ce qu'**elle comprend au moins un polymère complexant du calcium choisi parmi les polymères à squelette peptidique de type acide polyaspartique, polyglutamique, polylysine, polyglycine ou bien parmi les homopolymères et copolymères de l'acide acrylique ou méthacrylique, de l'acide polyacrylique ou polyméthacrylique ou bien parmi les copolymères du type polyacrylique-polyméthacrylique, polyacrylique-polyhydroethylacrylique, polyacrylique-polyacrylamide ou bien parmi les polymères polysaccharides naturels et/ou modifiés tel que le guar, la carboxymethylcellulose, la gomme xanthane ou bien parmi les polymères polysaccharides modifiés possédant des fonctions phosphates ou phosphonates ou bien parmi les polymères peptitidiques contenant des fonctions phosphates.

7. Dispersion colloïdale selon l'une des revendications précédentes **caractérisée en ce qu'**elle présente un rapport molaire, $R_1$, moles de fonctions anioniques présent au sein du polymère sur moles de calcium compris entre 0,0001 et 0,1.

8. Dispersion colloïdale selon l'une des revendications précédentes **caractérisée en ce qu'**elle comprend au moins un polymère complexant du calcium possédant un poids moléculaire, PM, compris entre 1000 et 20000 g/mole, de préférence compris entre 1000 et 5000 g/mole.

9. Dispersion colloïdale selon l'une des revendications précédentes **caractérisée en ce qu'**elle comprend au moins un agent dispersant.

10. Dispersion colloïdale selon la revendication 9 **caractérisée en ce qu'**elle comprend au moins un agent dispersant choisi parmi les polyphosphates, en particulier le tripolyphosphate de sodium.

11. Dispersion colloïdale selon l'une des revendications 9 ou 10 **caractérisé en ce que** la dispersion présente un rapport molaire, $R_2$, mole d'agent dispersant sur mole de calcium compris entre 0,001 et 0,5, de préférence compris entre 0,001 et 0,1.

12. Dispersion colloïdale selon l'une des revendications précédentes **caractérisée en ce qu'**elle comprend des éléments dopants choisis parmi les éléments alcalinoterreux comme le strontium, le magnésium, les éléments de terres rares comme l'yttrium ou les éléments de numéro atomique compris entre 57 et 71.

13. Plaquettes de phosphate de calcium obtenues par séchage de la dispersion colloïdale selon les revendications 1 à 12.

14. Procédé pour préparer les dispersions selon les revendications 1 à 12 **caractérisé en ce qu'**il comprend les étapes suivantes :

   i) préparer une solution de sels de calcium dont le pH est compris entre 4 et 6;
   ii) ajouter à la solution obtenue à l'étape i) une solution de phosphate, pendant une durée comprise entre 30 minutes et 4 heures et de manière à obtenir un rapport molaire calcium sur phosphore compris entre 1 et 2,5 et en maintenant constant le pH à une valeur comprise entre 4 et 6 ;

iii) traiter thermiquement la dispersion obtenue à l'étape ii) à une température comprise entre 50°C et 95°C ;

iv) laver la dispersion obtenue à l'étape iii) ;

v) ajouter un agent dispersant à la dispersion obtenue à l'étape iv) ;

vi) séparer la dispersion colloïdale obtenue à l'étape v) ;

et **en ce qu'**il utilise dans au moins l'une des étapes i) ou ii) des solutions contenant un ion ammonium ;

et **en ce que** l'on ajoute au moins un polymère complexant du calcium au cours de l'étape i) ou ii) mais avant l'étape iii).

**15.** Procédé selon la revendication 14 **caractérisé en ce que** la solution de calcium est une solution de $CaCl_2$ ou de $Ca(NO_3)_2$ .

**16.** Procédé selon l'une des revendications 14 à 15 **caractérisé en ce que** la concentration de la solution de calcium est comprise entre 0,25M et 2,5M, de préférence entre 1,25M et 1,75M.

**17.** Procédé selon l'une des revendications 14 à 16 **caractérisé en ce que** la solution de sel de phosphate est une solution de phosphate d'ammonium ou de sodium, notamment de $(NH_4)_2(HPO_4)$ ou $(NH_4)(H_2PO_4)$.

**18.** Procédé selon l'une des revendications 14 à 17 **caractérisé en ce que** le rapport molaire calcium sur phosphore est compris entre 1,3 et 1,7 et plus particulièrement il est de 1,66.

**19.** Procédé selon l'une des revendications 14 à 18 **caractérisé en ce que** la température du traitement thermique à l'étape iii) est comprise entre 50°C et 95°C, de préférence comprise entre 60°C et 90°C.

**20.** Utilisation des dispersions selon l'une des revendications 1 à 12 ou des plaquettes selon la revendication 13 comme additif alimentaire, comme charge de renfort, charge d'isolation thermique, excipient pharmaceutique, agent de polissage, matériaux de construction, additif pour les formulations bucco-dentaires notamment les dentifrices ou agent d'encapsulation.

**Claims**

**1.** Colloidal dispersion of calcium phosphate platelets containing at least one polymer which complexes calcium, of which the length of the platelets L is between 5 and 500 nm and of which the thickness of the platelets is between 0.5 and 20 nm.

**2.** Colloidal dispersion according to claim 1, **characterized in that** the length of the platelets L is between 5 and 300 nm, preferably between 5 and 200 nm.

**3.** Colloidal dispersion according to one of the preceding claims, **characterized in that** the thickness of the platelets is between 0.5 and 15 nm.

**4.** Colloidal dispersion according to one of the preceding claims, **characterized in that** it contains platelets of calcium phosphate displaying a monetite or apatite structure.

**5.** Colloidal dispersion according to one of the preceding claims, **characterized in that** it contains at least one calcium complexing polymer, which possesses anionic functions, preferably carboxylate, phosphate or phosphonate functions.

**6.** Colloidal dispersion according to one of the preceding claims, **characterized in that** it contains at least one calcium complexing polymer chosen from among the polymers with a peptide skeleton of polyaspartic acid, polyglutamic acid, polylysine or polyglycine type, or from among the homopolymers and copolymers of acrylic or methacrylic acid, polyacrylic or polymethacrylic acid, or from among the copolymers of polyacrylic-polymethacrylic, polyacrylic-polyhydroethylacrylic or polyacrylic-polyacrylamide type, or from among the natural and/or modified polysaccharides such as guar, carboxymethylcellulose or xanthane gum, or from among the modified polysaccharides possessing phosphate or phosphonate functions or from among the peptide polymers containing phosphate functions.

**7.** Colloidal dispersion according to one of the preceding claims, **characterized in that** it displays a molar ratio $R_1$,

moles of anionic functions present in the polymer over moles of calcium, of between 0.0001 and 0.1.

8. Colloidal dispersion according to one of the preceding claims, **characterized in that** it contains at least one calcium complexing polymer with a molecular weight MW, of between 1 000 and 20 000 g/mole, preferably between 1 000 and 5 000 g/mole.

9. Colloidal dispersion according to one of the preceding claims, **characterized in that** it contains at least one dispersing agent.

10. Colloidal dispersion according to claim 9, **characterized in that** it contains at least one dispersing agent chosen from among the polyphosphates, especially sodium tripolyphosphate.

11. Colloidal dispersion according to one of claims 9 or 10, **characterized in that** the dispersion displays a molar ratio $R_2$, mole of dispersing agent over mole of calcium, of between 0.001 and 0.5, preferably between 0.001 and 0.1.

12. Colloidal dispersion according to one of the preceding claims, **characterized in that** it contains doping elements chosen from among the alkaline-earth elements such as strontium or magnesium, rare earth elements such as yttrium or elements with an atomic number between 57 and 71.

13. Platelets of calcium phosphate obtained by drying the colloidal dispersion according to claims 1 to 12.

14. Procedure for preparing dispersions according to claims 1 to 12, **characterized in that** it comprises the following steps:

> i) prepare a solution of calcium salts with a pH between 4 and 6;
> ii) add to the solution obtained in step i) a solution of phosphate, for a period between 30 minutes and 4 hours, so as to obtain a molar ratio calcium over phosphorus of between 1 and 2.5, and maintaining a constant pH value of between 4 and 6;
> iii) heat-treat the dispersion obtained in step ii) at a temperature of between 50°C and 95 °C;
> iv) wash the dispersion obtained in step iii);
> v) add a dispersing agent to the dispersion obtained in step iv);
> vi) separate the colloidal dispersion obtained in step v);
> and **in that** it uses in at least one of the steps i) or ii) solutions containing an ammonium ion;
> and **in that** at least one calcium complexing polymer is added in the course of step i) or step ii), but before step iii).

15. Procedure according to claim 14, **characterized in that** the solution of calcium is a solution of $CaCl_2$ or $Ca(NO_3)_2$.

16. Procedure according to one of claims 14 or 15, **characterized in that** the concentration of the solution of calcium is between 0.25 M and 2.5 M, preferably between 1.25 M and 1.75 M.

17. Procedure according to one of claims 14 to 16, **characterized in that** the solution of phosphate salts is a solution of ammonium phosphate or sodium phosphate, in particular $(NH_4)_2(HPO_4)$ or $(NH_4)(H_2PO_4)$.

18. Procedure according to one of claims 14 to 17, **characterized in that** the molar ratio calcium over phosphorus is between 1.3 and 1.7 and specifically is 1.66.

19. Procedure according to one of claims 14 to 18, **characterized in that** the temperature of the heat-treatment in step iii) is between 50 °C and 95 °C, preferably between 60 °C and 90 °C.

20. Use of the dispersions according to one of claims 1 to 12 or of the platelets according to claim 13 as a foodstuff additive, reinforcing filler, thermal insulation filler, pharmaceutical excipient, polishing agent, building materials, additive for oral formulations, in particular dentifrices, or encapsulating agent.

**Patentansprüche**

1. Kolloidale Dispersion von plättchenförmigen Calciumphosphatpartikeln, die mindestens ein calciumkomplexbildendes Polymer enthält, wobei die Länge L der plättchenförmigen Partikel zwischen 5 und 500 nm und die Dicke der plättchenförmigen Partikel zwischen 0.5 und 20 nm liegt.

2. Kolloidale Dispersion nach Anspruch 1, **dadurch gekennzeichnet, dass** die Länge L der plättchenförmigen Partikel zwischen 5 und 300 nm, vorzugsweise zwischen 5 und 200 nm, liegt.

3. Kolloidale Dispersion nach einem der vorhergehenden Ansprüche, **dadurch gekennzeichnet, dass** die Dicke der plättchenförmigen Partikel zwischen 0.5 und 15 nm liegt.

4. Kolloidale Dispersion nach einem der vorhergehenden Ansprüche, **dadurch gekennzeichnet, dass** sie plättchenförmige Calciumphosphatpartikel enthält, die eine Monetit- oder Apatit-Struktur aufweisen.

5. Kolloidale Dispersion nach einem der vorhergehenden Ansprüche, **dadurch gekennzeichnet, dass** sie mindestens ein calciumkomplexbildendes Polymer enthält, das anionische Funktionen aufweist, vorzugsweise Carboxylat-, Phosphat- oder Phosphonatfunktionen.

6. Kolloidale Dispersion nach einem der vorhergehenden Ansprüche, **dadurch gekennzeichnet, dass** sie mindestens ein calciumkomplexbildendes Polymer enthält, das aus der Reihe der Polymere mit Peptidgerüst des Typs Polyasparaginsäure, Polyglutaminsäure, Polylysin, Polyglycin ausgewählt wird, oder auch aus der Reihe der Homopolymere und Copolymere der Acryl- oder Methacrylsäure, der Polyacryl- oder Polymethacrylsäure oder auch aus der Reihe der Copolymere des Typs Polyacryl-Polymethacryl, Polyacryl-Polyhydroethylacryl, Polyacryl-Polyacrylamid oder auch aus der Reihe der natürlichen und/oder modifizierten Polysaccharid-Polymere wie beispielsweise Guar, Carboxymethylzellulose, Xanthangummi oder auch aus der Reihe der modifizierten Polysaccharid-Polymere mit Phosphat- oder Phosphonatfunktionen oder auch aus der Reihe der Peptid-Polymere, die Phosphatfunktionen enthalten.

7. Kolloidale Dispersion nach einem der vorhergehenden Ansprüche, **dadurch gekennzeichnet, dass** sie ein Molverhältnis $R_1$ im Polymer vorhandener Mole mit anionischen Funktionen zu Molen Calcium zwischen 0.0001 und 0.1 aufweist.

8. Kolloidale Dispersion nach einem der vorhergehenden Ansprüche, **dadurch gekennzeichnet, dass** sie mindestens ein calciumkomplexbildendes Polymer enthält, das ein Molekulargewicht PM zwischen 1000 und 20000 g/mol besitzt, vorzugsweise zwischen 1000 und 5000 g/mol.

9. Kolloidale Dispersion nach einem der vorangehenden Ansprüche, **dadurch gekennzeichnet, dass** sie mindestens ein Dispergiermittel enthält.

10. Kolloidale Dispersion nach Anspruch 9, **dadurch gekennzeichnet, dass** sie mindestens ein Dispergiermittel enthält, das aus der Reihe der Polyphosphate gewählt wird, insbesondere Natriumtripolyphosphat.

11. Kolloidale Dispersion nach einem der Ansprüche 9 oder 10, **dadurch gekennzeichnet, dass** die Dispersion ein Molverhältnis $R_2$ Mole Dispergiermittel zu Mole Calcium zwischen 0.001 und 0.5, vorzugsweise zwischen 0.001 und 0.1, aufweist.

12. Kolloidale Dispersion nach einem der vorhergehenden Ansprüche, **dadurch gekennzeichnet, dass** sie Dotierelemente aufweist, die aus der Reihe der Erdalkalielemente ausgewählt werden, wie beispielsweise Strontium, Magnesium, aus der Reihe seltener Erdelemente wie beispielsweise Yttrium oder aus der Reihe der Elemente mit einer Ordnungszahl zwischen 57 und 71.

13. Plättchenförmige Calciumphosphatpartikel, erzeugt durch Trocknen der kolloidalen Dispersion nach den Ansprüchen 1 bis 12.

14. Verfahren zur Zubereitung der Dispersionen nach den Ansprüchen 1 bis 12, **gekennzeichnet durch** folgende Schritte:

   i) Zubereiten einer Calciumsalzlösung mit einem pH-Wert zwischen 4 und 6;
   ii) Zugeben einer Phosphatlösung zu der in Schritt i) erhaltenen Lösung über eine Dauer zwischen 30 Minuten und 4 Stunden hinweg, so dass ein Molverhältnis Calcium zu Phosphor zwischen 1 und 2.5 erzielt wird; und Konstanthalten des pH-Werts auf einem Wert zwischen 4 und 6.

iii) Unterziehen der in Schritt ii) erhaltenen Dispersion einer Wärmebehandlung bei einer Temperatur zwischen 50°C und 95°C;

iv) Waschen der in Schritt iii) erhaltenen Dispersion;

v) Zugeben eines Dispergiermittels zu der in Schritt iv) erhaltenen Dispersion;

vi) Trennen der in Schritt v) erhaltenen kolloidalen Dispersion;

sowie **dadurch gekennzeichnet, dass** bei dem Verfahren in mindestens einem der Schritte i) oder ii) Lösungen verwendet werden, die ein Ammoniumion enthalten;

und **dadurch**, dass während der Durchführung des Schritts i) oder ii), aber vor dem Schritt iii) mindestens ein calciumkomplexbildendes Polymer zugegeben wird.

15. Verfahren nach Anspruch 14, **dadurch gekennzeichnet, dass** es sich bei der Calciumlösung um eine $CaCl_2$- oder eine $Ca(NO_3)_2$-Lösung handelt.

16. Verfahren nach einem der Ansprüche 14 bis 15, **dadurch gekennzeichnet, dass** die Konzentration der Calciumlösung zwischen 0.25 M und 2.5 M, vorzugsweise zwischen 1.25 M und 1.75 M, liegt.

17. Verfahren nach einem der Ansprüche 14 bis 16, **dadurch gekennzeichnet, dass** es sich bei der Phosphatsalzlösung um eine Ammonium- oder NatriumPhosphatlösung, insbesondere um eine $(NH_4)_2(HPO_4)$- oder eine $(NH_4)(H_2PO_4)$-Lösung, handelt.

18. Verfahren nach einem der Ansprüche 14 bis 17, **dadurch gekennzeichnet, dass** das Molverhältnis Calcium zu Phosphor zwischen 1.3 und 1.7 liegt und insbesondere 1.66 beträgt.

19. Verfahren nach einem der Ansprüche 14 bis 18, **dadurch gekennzeichnet, dass** die Temperatur der Wärmebehandlung in Schritt iii) zwischen 50 °C und 95 °C, vorzugsweise zwischen 60 °C und 90 °C, liegt.

20. Verwendung der Dispersionen nach einem der Ansprüche 1 bis 12 oder der plättchenförmigen Partikel nach Anspruch 13 als Lebensmittelzusatzstoff, als Verstärkungsfüllstoff, als wärmedämmender Füllstoff, als pharmazeutisches Bindemittel, als Poliermittel, als Baustoff, als Zusatzstoff für Rezepturen für Mund- und Zahnprodukte, insbesondere Zahnpasta oder als Einbettungsmittel.

**RÉFÉRENCES CITÉES DANS LA DESCRIPTION**

**Documents brevets cités dans la description**

- US 5427754 A